# FASCICULE DE BREVET EUROPEEN

(11) **EP 2 115 255 B1**
(45) Date de publication et mention de la délivrance du brevet: **01.09.2010**
(21) Numéro de dépôt: 08775668.0
(22) Date de dépôt: 04.03.2008
(51) Int. Cl.: E05D 5/02, E05D 5/04, E05D 5/06

(54) **SYSTEME DE FIXATION D'UNE CHARNIERE SUR UN OUVRANT DE VEHICULE AUTOMOBILE**
SYSTEM ZUR BEFESTIGUNG EINES SCHARNIERS AN EINEM AUTOMOBILTÜRBLATT
SYSTEM FOR ATTACHING A HINGE ON AN AUTOMOBILE DOOR LEAF

(30) Priorité: 06.03.2007 FR 0753654
(43) Date de publication de la demande: 11.11.2009
(73) Titulaire: Renault SAS, 92100 Boulogne Billancourt (FR)
(72) Inventeur: BRIAULT, Michel, F-94000 Creteil (FR); DESMARD, Frédéric, F-91300 Massy (FR); ERBS-JORY, Dominique, F-95120 Ermont (FR); VOLLET, Ludovic, F-78640 Neauphle-le-Chateau (FR)
(86) Numéro de dépôt international: PCT/FR2008/050365
(87) Numéro de publication internationale: WO 2008/125769

(56) Documents cités:
- EP-A- 1 347 135
- EP-A2- 1 229 254
- US-A- 2 163 323
- US-A1- 2005 046 229

## Description

L'invention concerne un système de fixation d'une charnière sur un ouvrant de véhicule automobile et son procédé de fixation.

Habituellement, les charnières sont fixées sur l'ouvrant par des moyens de fixation de type vis - écrou ou par soudage.

Par exemple, dans le document EP1347135, deux charnières sont fixées sur une porte de coffre par des moyens de fixation de type vis - écrou. Ces moyens de fixation nécessitent de réaliser des trous dans la porte de coffre, ce qui ajoute une étape dans le procédé de montage de la porte de coffre et fragilise la corrosion de cette dernière. De plus, l'aspect de la partie visible de la charnière qui est fixée sur la porte de coffre n'est pas satisfaisant. La tenue mécanique de ces liaisons est également limitée. Cette solution n'est donc pas satisfaisante dans un contexte de limitation des temps et des coûts de montage sur une ligne de fabrication. Le document US 2 163 323 décrit de liaisons rivetées enserrant la charnière.

L'invention vise à améliorer le système de fixation d'une charnière sur un ouvrant de véhicule automobile.

Pour atteindre ces objectifs, il est prévu dans le cadre de la présente invention un système de fixation d'une charnière sur un ouvrant de véhicule automobile comportant au moins deux liaisons rivetées autopoinçonnées enserrant la charnière et l'ouvrant.

Selon d'autres caractéristiques de l'invention, l'ouvrant est une porte de coffre.

Selon d'autres caractéristiques de l'invention, les liaisons rivetées autopoinçonnées enserrent trois éléments superposés, un support pivotant de la charnière, une doublure de la porte de coffre et un renfort de la porte de coffre.

Il est également prévu dans le cadre de l'invention, un procédé de fixation d'une charnière sur un ouvrant de véhicule automobile, la charnière comportant un support pivotant, l'ouvrant comportant au moins deux éléments, **caractérisé en ce qu**'on superpose sur une structure support préformée, dans l'ordre suivant, le support pivotant, le premier élément et le second élément de l'ouvrant, on réalise au moins deux liaisons rivetées autopoinçonnées sur le second élément de façon à enserrer le support pivotant et les deux éléments.

Selon d'autres caractéristiques de l'invention, le procédé est **caractérisé en ce que** l'ouvrant est une porte de coffre comportant une doublure, un renfort et en ce qu'on superpose sur une structure support préformée, dans l'ordre suivant, la charnière, la doublure, le renfort, on réalise au moins deux liaisons rivetées autopoinçonnées sur le renfort de façon à enserrer le support pivotant, la doublure, le renfort.

Selon d'autres caractéristiques de l'invention, le procédé est **caractérisé en ce qu'**on réalise trois liaisons rivetées autopoinçonnées non alignées.

D'autres caractéristiques, buts et avantages de la présente invention apparaîtront à la lecture de la description détaillée qui va suivre, et en regard des dessins annexés, donnés à titre d'exemple non limitatif.
La figure 1 est une vue en perspective de deux charnières à fixer sur une porte de coffre selon l'invention.
La figure 2 représente une vue schématique d'un appareil permettant de mettre en oeuvre le procédé selon l'invention.
La figure 3 représente une demi vue en coupe axiale d'une liaison rivetée autopoinçonnée selon l'invention.
La figure 4 représente une vue schématique d'une charnière comportant des liaisons rivetées autopoinçonnées selon l'invention.

Pour réaliser un système de fixation d'une charnière 4 sur un ouvrant 8 de véhicule automobile selon l'invention, la charnière 4 et au moins deux éléments 1, 2 de l'ouvrant 8 sont superposés puis fixés par des rivets autopoinçonneurs.

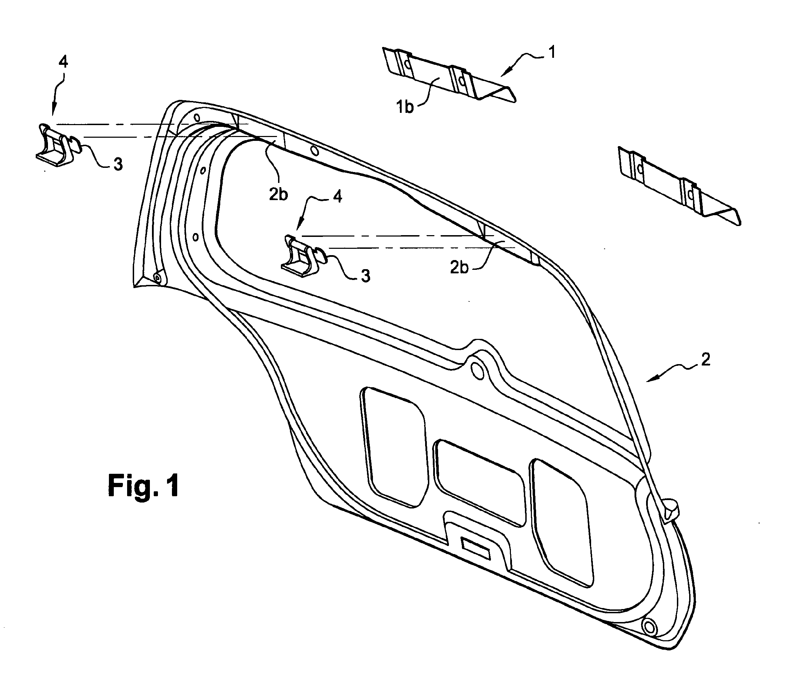

Telle que représentée à la figure 1, la porte de coffre 8 comporte au moins un renfort 1 et une doublure 2. Chacune des deux charnières 4 comporte un support pivotant 3 apte à être fixé sur la porte de coffre 8.

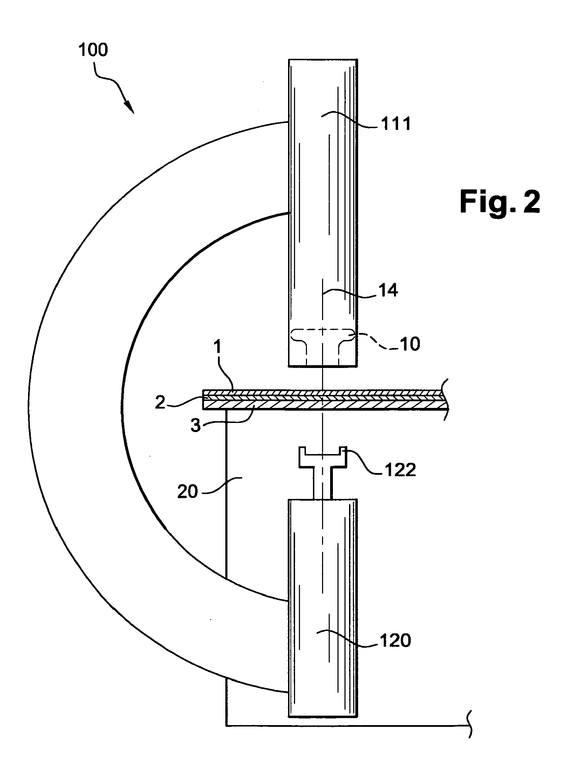

Afin de réaliser le rivetage, on utilise un appareil 100 et une structure support 20 spécialement adaptés à cette opération tel que représenté à la figure 2.

Cet appareil 100 est courbée formant un C afin d'améliorer l'accessibilité aux zones à riveter. Il comporte, en particulier, une portion inférieure 120 et une portion supérieure 111.

La portion supérieure est un actionneur 111 permettant la distribution de rivets 10. L'actionneur 111 peut être hydraulique ou électrique. L'actionneur 111 et les rivets 10 peuvent présenter une forme cylindrique à section circulaire. Les rivets 10 présentent un axe 14 de révolution.

La portion inférieure 120 comporte à son extrémité libre une empreinte ou une bouterolle 122, par exemple à section circulaire, localisée dans le prolongement de l'actionneur 111.

Lors du rivetage, les axes de l'actionneur 111 et de la bouterolle 122 sont disposés coaxialement à l'axe 14 du rivet 10 de part et d'autre des pièces 1, 2, 3 à riveter.

La structure support 20 peut comporter des appuis (non représentés) pour maintenir géométriquement les différentes pièces 1, 2, 3 lors du procédé.

La partie inférieure (non représentée) de la structure support 20 peut être dimensionnée de telle façon qu'elle peut coopérer avec la portion inférieure 120 pour permettre l'autocentrage des liaisons rivetées. Par exemple, la partie inférieure peut comporter des évidements permettant à la portion inférieure 120 de se loger pour réaliser la mise en géométrie de l'appareil 100 par rapport à la charnière et à la porte de coffre 8. Le positionnement de l'appareil 100 est donc simplifié pour réaliser les liaisons rivetées.

La partie supérieure (non représentée) de la structure support 20 peut être dimensionnée de telle manière qu'elle est apte à recevoir la charnière 4 et les différents éléments 1, 2, 3 de la porte du coffre 8 pour respecter leur mise en géométrie les uns par rapport aux autres.

Lors du procédé de fixation de la charnière 4 sur la porte de coffre 8, on superpose sur la structure support 20 préformée dans l'ordre suivant la face inférieure 3b du support pivotant 3, la face inférieure 2b de la doublure 2 et la face inférieure 1b du renfort 1. La superposition de ces pièces 1, 2, 3 est réalisée de manière à les rendre sensiblement parallèles. Ensuite, on réalise au moins deux liaisons rivetées autopoinçonnées sur le renfort 1 de façon à enserrer la charnière 4 et l'ouvrant 8, plus particulièrement le support pivotant 3, la doublure 2 et le renfort 1.

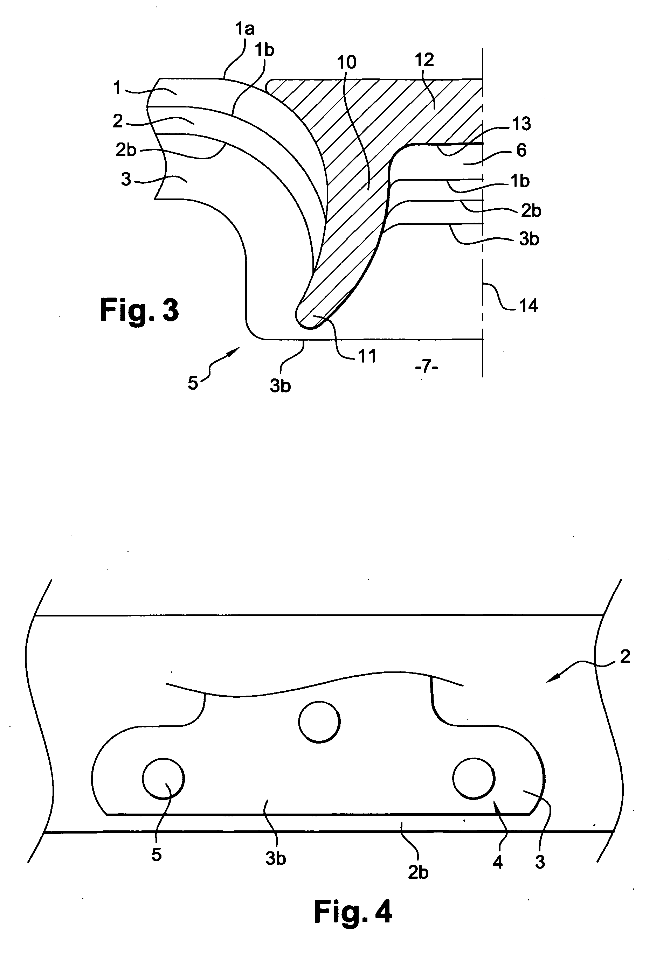

Au moins deux liaisons rivetées autopoinçonnées sont réalisées mais pour la compréhension de cette invention, une seule liaison rivetée autopoinçonnée sera décrite avec la figure 3.

Tels que représentés à la figure 3, le support pivotant 3, la doublure 2 et le renfort 1 sont ainsi enserrés par un rivet 10 autopoinçonneur. Ce rivet 10 comporte un pied 11 de forme cylindrique creuse et une tête 12. La tête 12 présente une paroi inférieure 13 orientée vers le pied 11 et sensiblement parallèle à la face supérieure 1 a du renfort 1 ainsi qu'à la face inférieure 3b du support pivotant 3.

Après le rivetage, le rivet 10 présente encore une forme sensiblement symétrique de révolution d'axe 14.

Dans la liaison rivetée comportant le renfort 1, entre la paroi inférieure 13 de la tête 12 de rivet 10 et la face supérieure 1 a, une zone de vide 6 est présente dans le mode de réalisation décrit et représenté sur la figure 3. Néanmoins, suivant les dimensions du rivet 10 et des épaisseurs des pièces 1, 2, 3 à assembler la zone de vide 6 peut être plus ou moins importante ou même ne pas exister.

La tête 12 du rivet 10 est enfoncée dans le renfort 1 de manière à ce que la surface externe de la tête 12 soit dans le prolongement de la face supérieure 1a et constituer ainsi une surface sensiblement plane avec la paroi supérieur 1a du renfort 1. Lors de la mise en place du rivet 10 autopoinçonneur, celui-ci pénètre dans la pièce se trouvant sur le dessus des pièces 1, 2, 3 à assembler, à savoir le renfort 1 sur les figures 2 et 3, le pied 11 du rivet 10 se déforme alors en s'écrasant latéralement et provoque une déformation des pièces 1, 2, 3 à assembler, en particulier une déformation de la face inférieure 3a du support pivotant 3. Plus particulièrement, la déformation du rivet 10 autopoinçonneur provoque la formation d'un bourrelet, le pied 11 s'évasant dans la pièce située au-dessous de l'empilement des pièces 1, 2, 3 à assembler, à savoir le support pivotant 3 sur les figures 2 et 3. Ainsi, la liaison présente une protubérance 5 tournée vers l'intérieur 7 du véhicule. Cette protubérance 5 présente donc un aspect de meilleure qualité, notamment grâce à la technique d'autopoinçonnage décrite ci-dessus, utilisée pour réaliser les liaisons rivetées.

Par ailleurs, une telle technique d'autopoinçonnage présente l'avantage principal d'obtenir un assemblage très résistant et parfaitement étanche. Elle permet également de pouvoir assembler des pièces de matériaux différents et épaisseurs différentes, tout en garantissant une haute résistance d'assemblage et aucune détérioration des pièces. Une telle technique d'autopoinçonnage offre également la possibilité d'un simple contrôle visuel pour vérifier l'assemblage et une qualité d'assemblage reproductible et fiable.

La figure 4 illustre une disposition des liaisons rivetées qui permettent de répartir les contraintes et contribuer ainsi à améliorer la tenue mécanique. Selon la charnière 4 choisie, le nombre de liaisons rivetées sera adapté. Par exemple, trois liaisons rivetées autopoinçonnées ont été réalisées à la figure 4. Les protubérances 5 formées par les rivets 10 ne sont pas alignées.

Les matériaux utilisés peuvent être, par exemple, l'acier, l'aluminium. Les pièces 1, 2, 3 peuvent être, par exemple, toutes en aluminium ou soit en aluminium soit en acier. Les matériaux des différentes pièces 1, 2, 3, ne sont pas nécessairement choisis de manière identique.

Les dispositions choisies permettent donc d'assurer une meilleure tenue mécanique (pelage, arrachage et cisaillement) entre la charnière 4 et la porte de coffre 8. Au moins deux liaisons rivetées sont réalisées pour assurer ces résultats.

Le procédé selon l'invention présente une grande simplicité de mise en oeuvre et permet de réduire les temps opératoires.

Les avantages liés à la simplicité et à la rapidité de mise en oeuvre d'un tel procédé permettent de réduire les coûts qu'induisent les opérations de fixation et d'assurer une meilleure tenue de la liaison à la corrosion.

En outre, ce procédé est sûr et permet de limiter substantiellement les risques d'échec d'une fixation d'une charnière 4.

Les enseignements de cette invention sont évidemment applicables à chacune des multiples charnières que pourrait présenter un véhicule pour assurer l'ouverture ou la fermeture d'un ouvrant tel que les charnières de porte, de capot, etc.

## Revendications

1. Système de fixation d'une charnière (4) sur un ouvrant (8) de véhicule automobile, **caractérisé en ce qu'**il comporte au moins deux liaisons rivetées autopoinçonnées enserrant la charnière (4) et l'ouvrant (8).

2. Système de fixation selon la revendication 1, **caractérisé en ce que** l'ouvrant est une porte de coffre (8).

3. Système de fixation selon la revendication 2, **caractérisé en ce que** les liaisons rivetées autopoinçonnées enserrent trois éléments superposés, un support pivotant (3) de la charnière (4), une doublure (2) de la porte de coffre (8) et un renfort (1) de la porte de coffre (8).

4. Procédé de fixation d'une charnière (4) sur un ouvrant (8) de véhicule automobile, la charnière (4) comportant un support pivotant (3), l'ouvrant (8) comportant au moins deux éléments (1, 2), **caractérisé en ce qu'**on :
- superpose sur une structure support (20) préformée, dans l'ordre suivant, le support pivotant (3), le premier élément (2) et le second élément (1) de l'ouvrant (8),
- réalise au moins deux liaisons rivetées autopoinçonnées sur le second élément (1) de façon à enserrer le support pivotant (3) et les deux éléments (1, 2).

5. Procédé selon la revendication 4, **caractérisé en ce que** l'ouvrant (8) est une porte de coffre (8) comportant une doublure (2), un renfort (1) **et en ce qu'**on :
- superpose sur une structure support (20) préformée, dans l'ordre suivant, la charnière (4), la doublure (2), le renfort (1),
- réalise au moins deux liaisons rivetées autopoinçonnées sur le renfort (1) de façon à enserrer le support pivotant (3), la doublure (2), le renfort (1).

6. Procédé selon la revendication 5, **caractérisé en ce qu'**on réalise trois liaisons rivetées autopoinçonnées non alignées.

## Claims

1. System for fixing a hinge (4) on a door leaf (8) of a motor vehicle, **characterized in that** it comprises at least two riveted self-punched links that clamp the hinge (4) and the door leaf (8).

2. Fixing system according to Claim 1, **characterized in that** the door leaf is a trunk lid (8).

3. Fixing system according to Claim 2, **characterized in that** the riveted self-punched links clamp three stacked elements, a pivoting support (3) for the hinge (4), a liner (2) for the trunk lid (8) and a reinforcing piece (1) for the trunk lid (8).

4. Method of attaching a hinge (4) on a door leaf (8) of a motor vehicle, the hinge (4) comprising a pivoting support (3), the door leaf (8) comprising at least two elements (1, 2), **characterized in that**:
- the pivoting support (3), the first element (2) and the second element (1) of the door leaf (8), **in that** order, are stacked on a preformed support structure (20),
- at least two riveted self-punched links are implemented on the second element (1) so as to clamp the pivoting support (3) and the two elements (1, 2).

5. Method according to Claim 4, **characterized in that** the door leaf (8) is a trunk lid (8) comprising a liner (2), a reinforcing piece (1) **and in that:**
- the hinge (4), the liner (2) and the reinforcing piece (1), **in that** order, are stacked on a preformed support structure (20),
- at least two riveted self-punched links are implemented on the reinforcing piece (1) so as to clamp the pivoting support (3), the liner (2) and the reinforcing piece (1).

6. Method according to Claim 5, **characterized in that** three non-aligned riveted self-punched links are implemented.

## Patentansprüche

1. System zur Befestigung eines Scharniers (4) an einem Öffnungselement (8) eines Kraftfahrzeugs, **dadurch gekennzeichnet, dass** es mindestens zwei genietete selbstgestanzte Verbindungen umfasst, die das Scharnier (4) und das Öffnungselement (8) einklemmen.

2. Befestigungssystem nach Anspruch 1, **dadurch gekennzeichnet, dass** das Öffnungselement ein Kofferraumdeckel (8) ist.

3. Befestigungssystem nach Anspruch 2, **dadurch gekennzeichnet, dass** die genieteten selbstgestanzten Verbindungen drei übereinanderliegende Elemente - eine Schwenkstütze (3) des Scharniers (4), eine Auskleidung (2) des Kofferraumdeckels (8) und eine Verstärkung (1) des Kofferraumdeckels (8) - einklemmen.

4. Verfahren zur Befestigung eines Scharniers (4) an einem Öffnungselement (8) eines Kraftfahrzeugs, wobei das Scharnier (4) eine Schwenkstütze (3) umfasst und das Öffnungselement (8) mindestens zwei Elemente (1, 2) umfasst, **dadurch gekennzeichnet, dass** man
- auf einer vorgeformten Stützstruktur (20) die Schwenkstütze (3), das erste Element (2) und das zweite Element (1) des Öffnungselements (8) in dieser Reihenfolge übereinanderlegt und
- mindestens zwei genietete selbstgestanzte Verbindungen am zweiten Element (1) ausführt, um die Schwenkstütze (3) und die beiden Elemente (1, 2) einzuklemmen.

5. Verfahren nach Anspruch 4, **dadurch gekennzeichnet, dass** das Öffnungselement (8) ein Kofferraumdeckel (8) ist, der eine Auskleidung (2) und eine Verstärkung (1) umfasst, und dass man
- auf einer vorgeformten Stützstruktur (20) das Scharnier (4), die Auskleidung (2) und die Verstärkung (1) in dieser Reihenfolge übereinanderlegt und
- mindestens zwei genietete selbstgestanzte Verbindungen an der Verstärkung (1) ausführt, um die Schwenkstütze (3), die Auskleidung (2) und die Verstärkung (1) einzuklemmen.

6. Verfahren nach Anspruch 5, **dadurch gekennzeichnet, dass** man drei nicht fluchtende genietete selbstgestanzte Verbindungen ausführt.
